# FASCICULE DE BREVET EUROPEEN

(11) **EP 0 610 150 B1**
(45) Date de publication et mention de la délivrance du brevet: **07.01.1998**
(21) Numéro de dépôt: 94480009.3
(22) Date de dépôt: 28.01.1994
(51) Int. Cl.: A01C 7/00, C05G 1/00

(54) **Composition pour l'ensemencement de terrains bruts**
Komposition zum Säen von unkultivierten Böden
Composition for seeding uncultivated soil

(30) Priorité: 04.02.1993 FR 9301439
(43) Date de publication de la demande: 10.08.1994
(73) Titulaire: PLAN STE DE PRODUCTION GRAINIERE PLAN SPG, 84000 Avignon (FR)
(72) Inventeur: Mounier, Jean-Jacques, F-26740 Saint Marcel Les Sauzet (FR)
(74) Mandataire: Hautier, Jean-Louis

(56) Documents cités:
- EP-A- 0 290 704
- FR-A- 2 016 019
- FR-A- 2 204 944

## Description

La présente invention concerne une composition de plusieurs éléments, permettant l'ensemencement et donc la réimplantation durable d'une végétation herbacée et/ou ligneuse et/ou florale sur des terrains bruts, voire stériles.

La composition est un mélange précis de différents composants élémentaires, qui sont l'eau, des semences, des amendements minéral et organique et/ou des engrais organo-minéraux.

De nombreux documents proposent des solutions pour l'ensemencement.

*Parmi ceux-ci, le document FR-A-2. 565. 776 concerne un procédé* *et appareillage pour produire une nappe ensemencée pour la* *croissance par exemple de gazon, qui utilise comprend une nappe* *ensemencée qui comprend deux couches de nappe semblables* *superposées dont chacune est en coton et présente une face* *floconneuse. Une machine à ensemencer sème les graines de trémies* *sur la surface floconneuse de l'une des couches et un agent de* *retenue d'eau et de la tourbe sont aussi appliqués à partir de* *trémies respectivement. Un adhésif est appliqué à la surface* *ensemencée par un pulvérisateur avant que la seconde couche soit* *superposée et collée à la couche de nappe ensemencée pour former* *la nappe composite retenant et protégeant la semence entre* ses *deux couches.*

Ce dispositif de mise en oeuvre du procédé est très lourd financièrement à utiliser, puisqu'il faut prévoir une machine pouvant ensemencer des graines dans des couches, qui sont elles aussi appliquées grâce à cette machine.

*Le document FR-A-2.567.357 concerne un procédé pour favoriser* *la levée de plantes cultivées à petites graines, semées dans les* *champs.*

*Il comprend les étapes consistant à semer des graines dans* *un champ et à appliquer au sol directement sur les graines semées* *une émulsion qui renferme une graisse animale.*

Ce document ne se distingue que par l'application d'une émulsion sur les graines, il faut donc effectuer plusieurs étapes, ce qui est une perte de temps.

*Le document FR-A-1.526.749 concerne un procédé pour* *l'ensemencement ou la plantation d'un sol soumis à l'érosion par* *le vent et l'eau, dans lequel un obstacle organique et* *humidifiable s'opposant à l'érosion est placé sur ce sol,* *remarquable notamment par les caractéristiques suivantes,* *considérées séparément ou en combinaison.*

*Tout d'abord on dispose comme obstacle une matière formant* *des cellules ouvertes formée de baguettes ou de bandes reliées* *entre elles, et l'espace des cellules est rempli de terre de sorte* *que celle-ci est reliée au lieu. Puis, la matière est formée par* *les chutes de fabrication et de découpage d'équerre de planches* *de fibres de bois, de contreplaqué et de plaques de bois régénéré.* *Ensuite, les cellules ont la forme de quadrilatères, par exemple* *la forme de rectangles, de préférence la forme de carrés, mais* *également la forme d'hexagones réguliers (forme en nid* *d'abeilles). Enfin, les baguettes ou bandes sont reliées ensemble* *de façon amovible.*

Ce procédé ne permet pas d'ensemencer de grandes surfaces, car il n'est pas évident de quadriller une superficie très importante ; d'autre part, le coût en matériel et manutention d'un tel procédé est très élevé.

*Le document FR-A-2.635.639 concerne un procédé* *d'humidification de la terre végétale utilisant la terre* *diatomique broyée en sous-couche de cette dernière dans* *différentes utilisations comme les bacs à plantes, les terrains* *de sports et d'agrément, les talus : routes et terrains de golf.* *Dans le cas de bacs à plantes adaptés au dispositif, un bac* *intérieur permet d'utiliser au mieux le pouvoir élevé de* *capillarité de la terre diatomique. S'il n'est pas possible* *d'adapter un bac intérieur au bac extérieur, le support de la par* *de la fibre plastique et par une nappe textile, cette dernière* *assurant le degré d'humidification souhaité. Pour les talus, la* *fibre plastique est utilisée en sous-couche comme support de la* *terre diatomique afin de limiter les phénomènes de ravinement. Sur les terrains de sports ou d'agrément, la fibre n'est employée que pour les terrains non protégés au ravinement des eaux.*

Cette invention impose d'avoir des strates bien différenciées dans la structure du sol, ce qui implique plusieurs passages au même endroit afin de répondre aux exigences stratigraphiques.

*Enfin, le document FR-A-2.204.944 concerne un procédé d'ensemencement d'un terrain assurant une apparition rapide de la végétation, caractérisé en ce qu'on épand sur une surface, préalablement préparée à son application, une bouillie comprenant un composant humifère organique, un composant liant hygroscopique, une semence prégermée et un apport de nourriture. La bouillie utilisée comporte un composant humifère organique, un composant liant hygroscopique, une semence prégermée et un apport de nourriture, et correspond à la composition selon le préambule de la revendication 1.*

Ce procédé présente une similarité dans le concept puisqu'il s'agit d'une bouillie que l'on étale mais le procédé est très différent puisque la nature de la bouillie est différente. Ce procédé comprend, premièrement, des éléments humifères organiques, c'est-à-dire des terreaux ; dans notre cas, il ne s'agit que d'engrais organique et/ou organo-minéral qui servent uniquement de nourriture aux plantes et non pas de milieu de culture proprement dit ; deuxièmement, des éléments liants et hygroscopiques, ceux-ci absorbent et restituent l'eau provenant de l'air ce qui n'est pas notre cas ; troisièmement, de l'eau et d'un apport de nourriture, ce qui est presque évident pour une bouillie où des plantes doivent pousser, et quatrièmement, une semence prégermée, ce qui est opposé à notre procédé où les semences sont sèches et n'ont préalablement, à leur mise en oeuvre, fait l'objet d'aucun traitement (eau, température) d'accélération de germination.

Mais la différence essentielle provient des valeurs précises qui sont énumérées dans les revendications 1 et 2 et qui sont le fait de nombreuses études du personnel de la demanderesse. De plus, l'amendement minéral a une constitution particulièrement intéressante qui est constituée de diatonite et/ou de zéolite.

La présente invention propose une solution à tous les problèmes précédemment cités, en dévoilant une composition pour l'ensemencement de terrains bruts, qui est d'un coût peu élevé, facile à mettre en oeuvre ; de plus, elle est normalement appliquée en une seule fois, il est bien entendu évident que l'on peut faire plusieurs applications.

Enfin, l'invention est très efficace dans le but qui lui a été alloué, c'est-à-dire l'ensemencement de terrains bruts.

Dans cette optique, la présente invention propose une composition pour l'ensemencement de terrains bruts, par l'intermédiaire d'un canon hydraulique ou tout autre moyen permettant de répandre ladite composition sous forme d'une bouillie, du type comprenant de l'eau, des amendements minéral et organique et/ou des engrais organo-minéraux, ainsi que des semences, caractérisée par le fait que l'eau est présente dans la proportion de 40 à 85 pour cent (%) de la masse totale de la composition, que l'amendement minéral, constitué dans un premier mode d'utilisation du procédé de diatomite, et dans un second mode d'utilisation de diatomite et de zéolite, est présent dans la proportion de 6 à 44 % de la masse totale de la composition, que l'amendement organique et/ou les engrais organo-minéraux sont présents dans la proportion de 3 à 26 % de la masse totale de la composition, et que les semences sont présentes dans la proportion de 1 à 3 % de la masse totale de la composition.

Préférablement, la composition est caractérisée par le fait que l'eau est présente dans la proportion de 60 à 62 % de la masse totale de la composition, que l'amendement minéral est présent dans la proportion de 24 à 25 % de la masse totale de la composition, que l'amendement organo-minéral est présent dans la proportion de 13 à 14 % de la masse totale de la composition, et que les semences sont présentes dans la proportion de 1 à 2 % de la masse totale de la composition.

Préférablement, l'amendement minéral est formé de 60 à 80 % de diatomite et de 20 à 40 % de zéolite.

La composition peut avoir un amendement minéral formé de 75 à 80 % de diatomite et de 20 à 25 % de zéolite.

Préférablement, la masse de diatomite est égale à la masse de zéolite.

Préférablement, l'amendement organique ou les engrais organo-minéraux comprennent de 45 à 70 % de matière organique, de 2,5 à 6 % d'azote présent sous différentes formes, de 5 à 8 % d'anhydride phosphorique, de 0 à 5 % de monoxyde de potassium, et enfin d'oligo-éléments.

De plus, la matière organique, qui compose l'amendement organo-minéral, est préférablement formée de lignine, de cellulose, d'acide humique, de protéines et d'eau.

Enfin, un fluidifiant est préférablement ajouté à la composition dans la proportion d'au moins un kilogramme pour mille litres d'eau.

Toutes les valeurs qui se trouvent ci-dessus sont exprimées en pourcentage, mais sont plus généralement données en kilogramme par hectare, ci-après désigné par : kg/ha.

Les variations des pourcentages, et donc de la quantité par surface, sont fonction de la nature des sols.

Ainsi, on peut définir quatre zones très typées les unes par rapport aux autres, qui réclament toutes l'application de la composition selon l'invention.

La zone 1 correspond à un sol bien pourvu en matières organiques, soit 20 % de roche et 80 % de terre végétale.

La zone 2 correspond à un sol moyennement pourvu en matière organique, soit 50 % de roche et 50 % de terre végétale.

La zone 3 correspond à un sol peu pourvu en matière organique, soit 80 % de roche et 20 % de terre végétale.

Et la zone 4 correspond à un sol stérile, soit 100 % de roche.

Parmi les variations de pourcentage, l'amendement organique et/ou les engrais organo-minéraux sont caractéristiques.

Ainsi, on trouve à une extrémité des variations de pourcentage, un amendement qui utilise près de 65 % de matière organique, 6 % d'azote sous différentes formes, dont près de 4 % sous forme organique et enfin plus de 10 % de matière minérale constituée de 5 % d'anhydride phosphorique, 5 % de monoxyde de potassium et des oligo-éléments, il est appelé amendement 1.

Cet amendement est plus particulièrement adapté à l'ensemencement des terrains en altitude ou en pente.

A l'autre extrémité des variations des pourcentages, un amendement, appelé amendement 2, utilise près de 47 % de matière organique, 2,5 % d'azote organique la matière minérale est formée de 8 % d'anhydride phosphorique et des oligo-éléments.

Cet amendement est utilisé en particulier pour l'ensemencement sur des terrains en plaine ou qui sont relativement plats et qui peuvent être facilement entretenus.

Bien entendu, selon la composition chimique du sol, l'altitude ou l'inclinaison du terrain, un mélange de ces amendements extrêmes sera effectué.

Tous ces résultats permettent d'obtenir le tableau I suivant, où les chiffres sont donnés avec pour unité des kilogrammes par hectare : kg/ha.

Cette unité sera également utilisée pour les tableaux suivants :

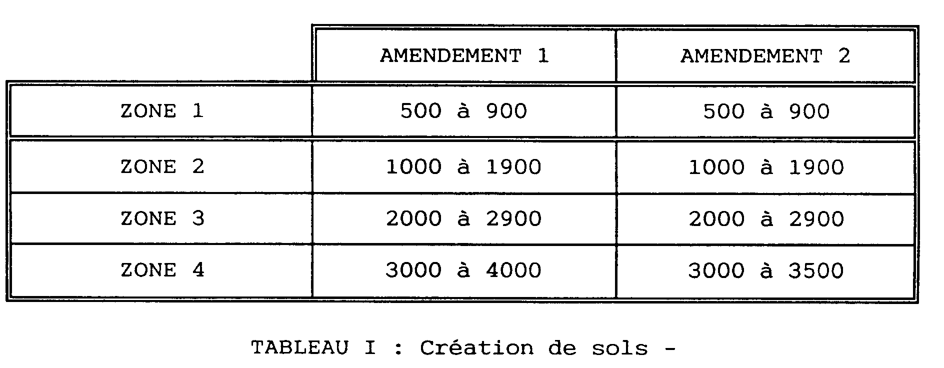

### Quantité d'amendement organique ou d'engrais organo-minéraux

Ces fourchettes de valeur permettent la création d'un sol dans lequel les conditions physico-chimiques sont favorables au développement racinaires des plantes, la rétention de l'eau est meilleure et la structure dudit sol diminue considérablement l'érosion.

Néanmoins, une fois que le sol a été créé, il peut être nécessaire de l'entretenir, voir le tableau II suivant :

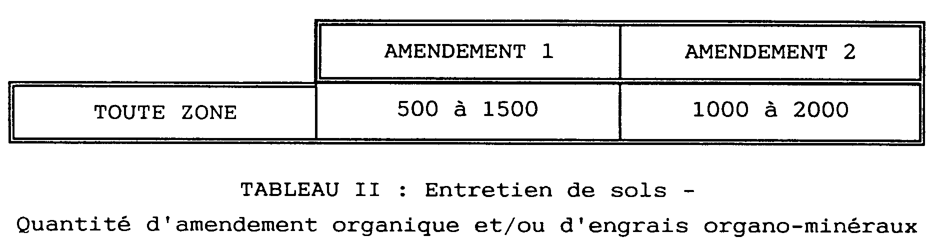

La matière organique des amendements organiques et/ou des engrais organo-minéraux comprend de la lignine permettant la formation d'humus à long terme, du fait d'une dégradation biologique lente.

La matière organique comprend également de la cellulose qui a un rôle différent mais complémentaire à la lignine, ladite cellulose permettant la formation d'humus à court terme, du fait d'une dégradation biologique rapide.

Ladite dégradation progressive des matières organiques libère les éléments minéraux qui y sont contenus, l'amendement comprenant les éléments majeurs prédosés, lesdits éléments minéraux et majeurs satisfaisant la nutrition des plantes.

La potasse, pour sa part, favorise la résistance au froid, au sec et à certaines maladies des plantes.

L'azote organique a un rôle très important, par le fait que s'il est d'origine animale, son action est rapide, alors que s'il est d'origine végétale, son action est plus lente.

Enfin, les oligo-éléments, qu'ils soient d'origine animale ou végétale, comme par exemple le fer, indispensable à la formation de chlorophylle, ou le molybdène indispensable aux bactéries colonisant les racines et fixant de l'azote, sont des effecteurs positifs sur la réussite de l'ensemencement.

Pour ce qui concerne l'eau, la quantité d'eau à l'hectare est fonction de la nature du sol et du positionnement du terrain.

La quantité d'eau varie entre 8000 et 12000 litres à l'hectare (l/ha), avec une utilisation la plus courante de 10000 l/ha.

Le positionnement du sol varie entre un sol plat et différents angles d'inclinaison exprimés en pourcentage (%).

La quantité d'eau par hectare peut monter à 12000 litres. En ce qui concerne les semences, elles peuvent être divisées en plusieurs types bien différenciés :
- tout d'abord, les espèces fourragères ou semi-fourragères qui peuvent fournir des prairies naturelles
- ensuite, les espèces gazonnantes qui fournissent une pelouse (espèce à moindre entretien)
- enfin, les espèces autres (espèces autochtones, vivaces, arbustives, florales, etc.) qui agrémentent le site.

Lorsque la composition sert à l'ensemencement d'espèces fourragères, on répand au sol au moins 100 kg/ha de semences.

Lorsque la composition sert à l'ensemencement d'espèces gazonnantes, on répand au sol au plus 350 kg/ha de semences.

Lorsque la composition sert à un ensemencement mixte, la quantité minimum de semences est alors de 200 kg/ha.

Enfin, l'amendement minéral sert de support de fixation et de substrat contenant surtout de la diatomite qui est une roche constituée par des débris d'une algue brune appelée diatomée.

Ainsi le tableau III, ci-dessous, montre la quantité d'amendement par surface de terre ensemencée, exprimée en kg/ha, et cela en fonction d'une part de la nature du terrain (on retrouve les zones 1 à 4 précédemment définies), mais aussi en fonction, d'autre part, de la déclivité du sol, soit entre 0 et plus de 45 %.

La diatomite, que l'on trouve dans l'amendement minéral, est connue pour ses propriétés absorbantes.

Néanmoins, on peut avoir un mélange entre ladite diatomite et un silicate naturel hydraté constitué par de la zéolite.

La zéolite a pour propriété d'activer les échanges ioniques.

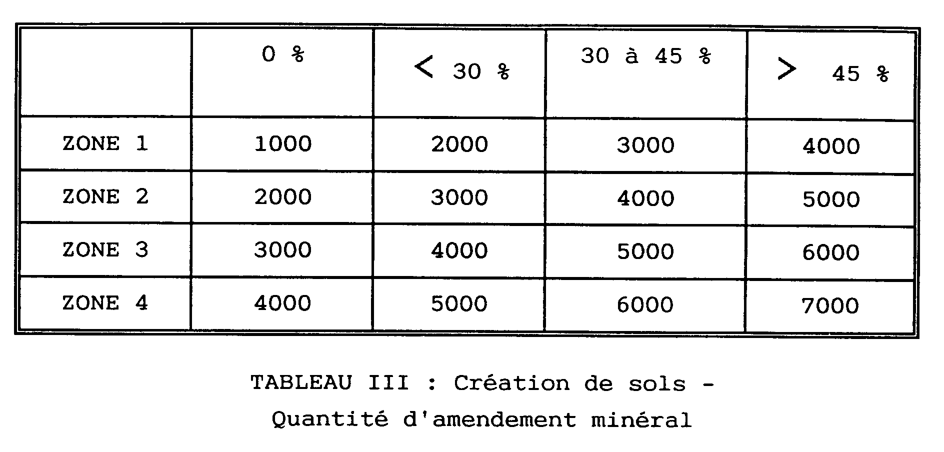

L'amendement minéral a donc un rôle dans le maintien d'une hygrométrie constante du sol où il est implanté, ainsi que dans l'alimentation des plantes en éléments essentiels pour le développement de ces dernières.

Dernier point, le fluidifiant qui peut être utilisé amène une meilleure fluidité à la composition permettant ainsi d'augmenter la proportion d'amendement minéral dans la cuve de stockage où elle est fabriquée, mais également, le fludifiant facilite le transit dans le canon hydraulique ou dans tout autre moyen permettant de répandre ladite composition sur une grande surface.

## Revendications

1. Composition pour l'ensemencement de terrains bruts, par l'intermédiaire d'un canon hydraulique ou tout autre moyen permettant de répandre ladite composition sous forme d'une bouillie, du type comprenant de l'eau, des amendements minéral et organique et/ou des engrais organo-minéraux, ainsi que des semences, caractérisée par le fait
que l'eau est présente dans la proportion de 40 à 85 pour cent (%) de la masse totale de la composition,
que l'amendement minéral est constitué de diatomite et est présent dans la proportion de 6 à 44 % de la masse totale de la composition,
que l'amendement organique et/ou les engrais organo-minéraux sont présents dans la proportion de 3 à 26 % de la masse totale de la composition, et
que les semences sont présentes dans la proportion de 1 à 3 % de la masse totale de la composition.

2. Composition pour l'ensemencement de terrains bruts, par l'intermédiaire d'un canon hydraulique ou tout autre moyen permettant de répandre ladite composition sous forme d'une bouillie, du type comprenant de l'eau, des amendements minéral et organique et/ou des engrais organo-minéraux, ainsi que des semences, caractérisée par le fait
que l'eau est présente dans la proportion de 40 à 85 pour cent (%) de la masse totale de la composition,
que l'amendement minéral est constitué de diatomite et de zéolite et est présent dans la proportion de 6 à 44 % de la masse totale de la composition,
que l'amendement organique et/ou les engrais organo-minéraux sont présents dans la proportion de 3 à 26 % de la masse totale de la composition, et
que les semences sont présentes dans la proportion de 1 à 3 % de la masse totale de la composition.

3. Composition, selon l'une quelconque des revendications 1 ou 2, caractérisée par le fait
que l'eau est présente dans la proportion de 60 à 62 % de la masse totale de la composition,
que l'amendement minéral est présent dans la proportion de 24 à 25 % de la masse totale de la composition, que l'amendement organo-minéral est présent dans la proportion de 13 à 14 % de la masse totale de la composition, et
que les semences sont présentes dans la proportion de 1 à 2 % de la masse totale de la composition.

4. Composition, selon la revendication 2, caractérisée par le fait
que l'amendement minéral est formé de 60 à 80 % de diatomite et de 20 à 40 % de zéolite.

5. Composition, selon la revendication 2, caractérisée par le fait
que la masse de diatomite est égale à la masse de zéolite.

6. Composition, selon l'une quelconque des revendications 1 à 3, caractérisée par le fait
que l'amendement organique et/ou les engrais organo-minéraux comprennent :
- de 45 à 70 % de matière organique,
- de 2,5 à 6 % d'azote présent sous différentes formes,
- de 5 à 8 % d'anhydride phosphorique,
- de 0 à 5 % de monoxyde de potassium, et enfin
- d'oligo-éléments.

7. Composition, selon la revendication 6, caractérisée par le fait
que la matière organique est formée de lignine, de cellulose, d'acide humique, de protéines et d'eau.

8. Composition, selon l'une quelconque des revendications 1 à 7, caractérisée par le fait
qu'un fluidifiant est ajouté à la composition dans la proportion d'au moins un kilogramme pour mille litres d'eau.

9. Composition, selon la revendication 4, caractérisée par le fait
que l'amendement minéral est formé de 75 à 80 % de diatomite et de 20 à 25 % de zéolite.

## Claims

1. Composition for seeding unplanted ground using a water canon or other means for spreading the said composition in the form of a mixture comprising water, mineral and organic improvers and/or organo-mineral fertilizers together with the seeds, characterized in that
water forms 40 to 85 percent (%) of the total mass of the composition,
the mineral improving agents consist of diatomite present as 6 to 44% of the total mass of the composition,
the organic improving agents and/or organo-mineral fertilizers form between 3 and 26% of the total mass of the composition
and the seeds form 1 to 3% of the total mass of the composition.

2. Composition for seeding unplanted ground using a water canon or other means for spreading the said composition in the form of a mixture comprising water, mineral and organic improvers and/or organo-mineral fertilizers together with the seeds, characterized in that
water forms 40 to 85% of the total mass of the composition,
the mineral improvers consist of diatomite and zeolite and form 6 to 44% of the total mass of the composition,
the organic improvers and/or organo-mineral fertilizer forms 3 to 26% of the total mass of the composition,
and the seeds form 1 to 3% of the total mass of the composition.

3. Composition according to any one of claims 1 or 2, characterized in that
water forms 60 to 62% of the total mass of the composition,
the mineral improver forms 24 to 25% of the total mass of the composition,
the organo-mineral improver forms 13 to 14% of the total mass of the composition,
the seeds form 1 to 2% of the total mass of the composition.

4. Composition according to claim 2 characterized in that
the mineral improver consists of 60 to 80% diatomite and 20 to 40% zeolite.

5. Composition according to claim 2 characterized in that
the mass of the diatomite is equal to the mass of the zeolite.

6. Composition according to any one of the claims 1 to 3 characterized in that
the organic improver and/or organo-mineral fertilizers comprise:
- 45 to 70% of organic matter,
- 2.5 to 6% of nitrogen present in various forms,
- 5 to 8% of phosphorous anhydride,
- 0 to 5% of potassium monoxide, and lastly
- oligo-elements.

7. Composition according to claim 6 characterized in that
the organic matter is formed of lignin, cellulose, humic acid, proteins and water.

8. Composition according to any one of claims 1 to 7 characterized in that
a fluidifier is added to the composition in the proportion of at least 1 kilo per thousand litres of water.

9. Composition according to claim 4 characterized in that
the mineral improver is formed of 75 to 80% of diatomite and 20 to 25% of zeolite.

## Patentansprüche

1. Komposition zur Einsaat von brachen Geländen mit Hilfe einer Wasserkanone oder jedem anderen Mittel, geeignet zum Verbreiten der besagten Komposition in der Form eines Breis, bestehend aus Wasser, mineralischen und organischen Bodenverbesserungsstoffen und/oder organisch-mineralischen Düngern sowie Samen, dadurch gekennzeichnet, daß das Wasser in dieser Komposition im Verhältnis von 40 bis 85 Prozent (%) der gesamten Masse vorhanden ist, der mineralischen Verbesserungsstoff aus Kieselgur besteht und in der Komposition im Verhältnis von 6 bis 44 % der gesamten Masse enthalten ist, der organische Verbesserungstoff und/oder die organisch-mineralischen Dünger im Verhältnis von 3 bis 26 % der gesamten Masse der Komposition ausmachen, und die Samen im Verhältnis von 1 bis 3 % der gesamten Masse der Komposition vorhanden sind.

2. Komposition zur Einsaat von brachen Geländen mit Hilfe einer Wasserkanone oder jedem anderen Mittel, geeignet zum Verbreiten der besagten Komposition in der Form eines Breis, bestehend aus Wasser, mineralischen und organischen Bodenverbesserungsstoffen und/oder organisch-mineralischen Düngern sowie Samen, dadurch gekennzeichnet, daß das Wasser in dieser Komposition im Verhältnis von 40 bis 85 Prozent (%) der gesamten Masse vorhanden ist, der mineralische Verbesserungsstoff aus Kieselgur und Zeolith besteht und im Verhältnis von 6 bis 44 % der gesamten Masse in der Komposition enthalten ist, der organische Verbesserungstoff und/oder die organisch-mineralischen Dünger im Verhältnis von 3 bis 26 % der gesamten Masse der Komposition vorhanden sind, und die Samen im Verhältnis von 1 bis 3 % der gesamten Masse der Komposition vorhanden sind.

3. Komposition gemäß irgendeinem der Ansprüche 1 oder 2, dadurch gekennzeichnet, daß das Wasser im Verhältnis von 60 bis 62 % der gesamten Masse der Komposition vorhanden ist, der mineralische Verbesserungsstoff im Verhältnis von 24 bis 25 % der gesamten Masse der Komposition vorhanden ist, der organisch-mineralische Verbesserungsstoff im Verhältnis von 13 bis 14 % der gesamten Masse der Komposition vorhanden ist, und die Samen im Verhältnis von 1 bis 2 % der gesamten Masse der Komposition vorhanden sind.

4. Komposition gemäß Anspruch 2, dadurch gekennzeichnet, daß der mineralische Verbesserungsstoff zu 60 bis 80 % aus Kieselgur und zu 20 bis 40 % aus Zeolith besteht.

5. Komposition gemäß Anspruch 2, dadurch gekennzeichnet, daß die Kieselgurmasse gleich der Zeolithmasse ist.

6. Komposition gemäß irgendeinem der Ansprüche 1 bis 3, dadurch gekennzeichnet, daß der organische Verbesserungsstoff und/oder die organisch-mineralischen Dünger wie folgt zusammengesetzt sind:
- 45 bis 70 % organische Stoffe,
- 2,5 bis 6 % in verschiedenen Formen anwesendem Stickstoff,
- 5 bis 8 % Phosphorsäureanhydrid,
- 0 bis 5 % Kaliummonoxid, und schließlich
- Oligoelemente.

7. Komposition gemäß Anspruch 6, dadurch gekennzeichnet, daß der organische Stoff aus Lignin, Zellulose, Huminsäure, Proteinen und Wasser zusammen gesetzt ist.

8. Komposition gemäß irgendeinem der Ansprüche 1 bis 7, dadurch gekennzeichnet, daß dieser Komposition ein Verflüssiger im Verhältnis von mindestens einem Kilogramm für tausend Liter Wasser zugefügt wird.

9. Komposition gemäß Anspruch 4, dadurch gekennzeichnet, daß der mineralische Verbesserungsstoff zu 75 bis 80 % aus Kieselgur und zu 20 bis 25 % aus Zeolith besteht.
